# EUROPÄISCHE PATENTSCHRIFT

(11) **EP 0 837 764 B1**
(45) Veröffentlichungstag und Bekanntmachung des Hinweises auf die Patenterteilung: **09.06.1999**
(21) Anmeldenummer: 96921902.1
(22) Anmeldetag: 02.07.1996
(51) Int. Cl.: B29C 45/76

(54) **VERFAHREN ZUR REGELUNG ODER STEUERUNG EINER SPRITZGIESSMASCHINE**
PROCESS FOR REGULATING OR CONTROLLING AN INJECTION MOULDING MACHINE
PROCEDE POUR LA REGULATION OU LA COMMANDE D'UNE PRESSE D'INJECTION

(30) Priorität: 11.07.1995 DE 19525141
(43) Veröffentlichungstag der Anmeldung: 29.04.1998
(73) Patentinhaber: Hehl, Karl, 72290 Lossburg (DE)
(72) Erfinder: Hehl, Karl, 72290 Lossburg (DE)
(74) Vertreter: Reinhardt, Harry
(86) Internationale Anmeldenummer: DE9601222
(87) Internationale Veröffentlichungsnummer: WO9702940

(56) Entgegenhaltungen:
- EP-A- 0 331 735
- EP-A- 0 436 732
- EP-A- 0 528 040
- US-A- 5 342 559

## Beschreibung

Die Erfindung betrifft ein Verfahren zur Regelung oder Steuerung einer Spritzgießmaschine zur Verarbeitung plastifizierbarer Materialien nach dem Oberbegriff der Ansprüche 1,9 oder 11.

Eine derartige Regelung ist für den Fall einer Positionsführungsgröße als Regelung für den Einspritzvorgang, die Füllphase und den Nachdruck aus US-A 5,342,559 bekannt. Vorgegeben werden dabei Geschwindigkeits- oder Druck-Sollwerte, die an bestimmten Positionen der Förderschnecke erreicht sein sollen. An den Übergängen zwischen benachbarten Geschwindigkeitsstufen werden Rampen vorgesehen. Die als Fördermittel ausgebildete Förderschnecke wird sodann im Rahmen einer Regelung diesem Soll-Verlauf nachgeführt, wobei durch entsprechende Stellgrößen an den Motor versucht wird, die Abweichung zwischen Soll- und Istwerten soweit als möglich zu verringern. Ziel ist also eine möglichst vollständige Closed-Loop-Regelung, um auftretende Störgrößen zu unterdrücken. Hierfür ist allerdings erforderlich, daß eine kontinuierliche zeitintensive Regelung betrieben wird.

Ferner ist aus EP-B 264 453 eine Einspritzregelung bekannt. Hierbei werden Einspritzgeschwindigkeiten vorgegeben und daraus ein Geschwindigkeits-Soll-Verlauf gebildet, wobei die Übergänge zwischen benachbarten Geschwindigkeitsstufen mit Rampen versehen werden, die entweder linear oder eine beliebige Interpolation zwischen den Übergangspunkten darstellen. Die als Fördermittel ausgebildete Förderschnecke wird sodann im Rahmen einer Regelung diesem Soll-Verlauf nachgeführt, wobei entweder Geschwindigkeitsaufnehmer vorgesehen werden oder mittels eines mit Inkrementalwegmessung versehenen Servomotors Weg-Größen als Ist-Wert in die Steuerung eingehen. Beide Ausführungsformen haben den Nachteil, daß einerseits von der Ausrüstung her die Geschwindigkeitsaufnehmer oder Servomotoren teuer sind, andererseits erfolgt keine unmittelbare Gegenüberstellung vergleichbarer Meßwerte, so daß ein zeitintensiver Algorithmus erforderlich ist, um die Maschine zu regeln.

Aus der EP-B 167 631 ist eine Regelung als Einspritzregelung bekannt, bei der das Motormoment eines Servomotors in Verbindung mit dem Einspritzdruck als Regelungsgröße herangezogen wird. Auch diese Lösung ist aufwendig und zeitintensiv. Gleiches gilt für die Staudruckregelung gemäß EP-B 245 522 und die Druckregelung gemäß der EP-B 260 328.

Der bisher genannte Stand der Technik verwendet somit kontinuierlich für die mit der Einspritzbewegung verbundenen Achsen aber auch für die Bewegung anderer Achsen einer Kunststoff-Spritzgießmaschine Servomotoren. In dieser Richtung bildet auch die EP-A 576 925 den Stand der Technik weiter, wobei dort für sämtliche Achsen an einer Spritzgießeinheit flüssigkeitsgekühlte elektrische Servomotoren vorgesehen werden. Allerdings wird dort, Anspruch 16 auch vorgeschlagen, den Antrieben der verschiedenen Baugruppen als Analog-Wegmeß-System Linearpotentiometer für die Lage- und Geschwindigkeitsregelung der flüssigkeitsgekühlten elektrischen Servomotoren zuzuordnen.

Aus der DE-A 44 46 857 ist ein Verfahren zur automatischen Einstellung einer Spritzgußgeschwindigkeitsbedingung bekannt. Hierzu wird ein Referenzdruck als Solldruckverlauf vorgegeben und mit einem tatsächlichen Druck im Formhohlraum verglichen. Weicht der erfaßte Druck vom Sollwert ab, so wird die Kolbenbewegung des Fördermittels entsprechend angepaßt. Dadurch ergibt sich ein Über- und Unterschwingen um die Solldruckkurve herum, ein Nachführen der Kurve auf die Zeitpunkte, zu denen der jeweilige Druck erreicht wird, wird jedoch nicht vorgenommen.

In der EP-B 331 735 werden statische Sensoren zur Erfassung der während eines Spritzzyklus auftretenden Einspritzkräfte im Lagerbereich des Fördermittels wie z.B. einer Förderschnecke vorgesehen. Die dabei gewonnenen Meßwerte finden üblicherweise Eingang in eine kraft- oder druckabhängige Einspritzregelung, sofern Meßwerte über den Werkzeuginnendruck nicht ausreichend oder aufgrund des verwendeten Materials ab einem bestimmtenn Zeitpunkt im Spritzzyklus nicht mehr zuverlässig gewonnen werden können.

Aus der EP-B 436 732 ist ferner bekannt, einen Drucksensor zum gleichen Zweck im Bereich der Förderschnecke selbst anzuordnen.

Die bekannten Vorrichtungen haben jedoch das Problem, daß sich die Einspritzkraft an einer Spritzgießmaschine während des eigentlichen Einspritzens in einem sehr hohen Bereich von meist mehreren Tonnen bewegt. Während des Dosiervorgangs, also während der Materialaufbereitung hingegen soll sich die Auflösung allerdings lediglich im Kilogramm-Bereich bewegen. Statische Kraftaufnehmer können zwar nun ausgehend von einem Nullpunkt bis zu den hohen Kräften durchgängig messen, ohne ihren Nullpunkt zu verlieren, jedoch verfügen sie gerade in dem unteren Bereich nicht über die gewünschte Auflösung oder, falls sie über die Auflösung verfügen, sind sie nicht geeignet, die großen Kräfte zu messen.

Ausgehend von diesem Stand der Technik liegt der Erfindung die Aufgabe zugrunde, ein Verfahren der eingangs genannten Gattung derart weiterzubilden, daß auf einfache und günstige Weise eine schnelle Einspritzregelung oder -steuerung erzielt wird.

Diese Aufgabe wird durch die Merkmale der Ansprüche 1,9 oder 11 gelöst.

Die Geschwindigkeitsregelung oder Druck- oder Kraftregelung wird nach diesen Ansprüchen auf eine Positionsregelung zurückgeführt. Jeder programmierte Geschwindigkeits- oder Druck-Soll-Wert wird in eine Positionsführungsgröße aufintegriert. Die dadurch vorgeschlagene Positions-Soll-Wertregelung oder -steuerung hat den Vorteil, daß der Regler selbst relativ einfach einen Vergleich zwischen Ist-Wert und vorberechneter Führungsgröße durchführen kann, ohne daß ein umfangreicher Regelalgorithmus durchlaufen werden muß.

Durch eine Triggerung kann dabei problemlos dynamischen Einflüssen, wie z.B. Massenunterschieden oder Beschleunigungs- oder Bremszeiten Rechnung getragen werden.

Prozesstechnisch wird somit mit einfachsten Rechenalgorithmen gewährleistet, daß wie heute üblich der Materialfluß bei immer gleichen Füllgraden der Form der gleiche ist unabhängig von irgendwelchen Störgrößen im zeitlich vorherigen Ablauf. Da es weiterhin nicht notwendig ist, daß der eigentliche Antrieb 'closed loop' ist, erhält man eine grobe Einstellkompatibilität des Prozesses unabhängig von der 'Qualität' oder 'Art' oder 'Steifigkeit' des Antriebs.

### Kurzbeschreibung der Figuren

- Fig. 1: die Draufsicht auf eine schematisch dargestellte Spritzgießmaschine,
- Fig. 1a: eine Schemadarstellung von Spritzgießmaschine mit Steuereinrichtung,

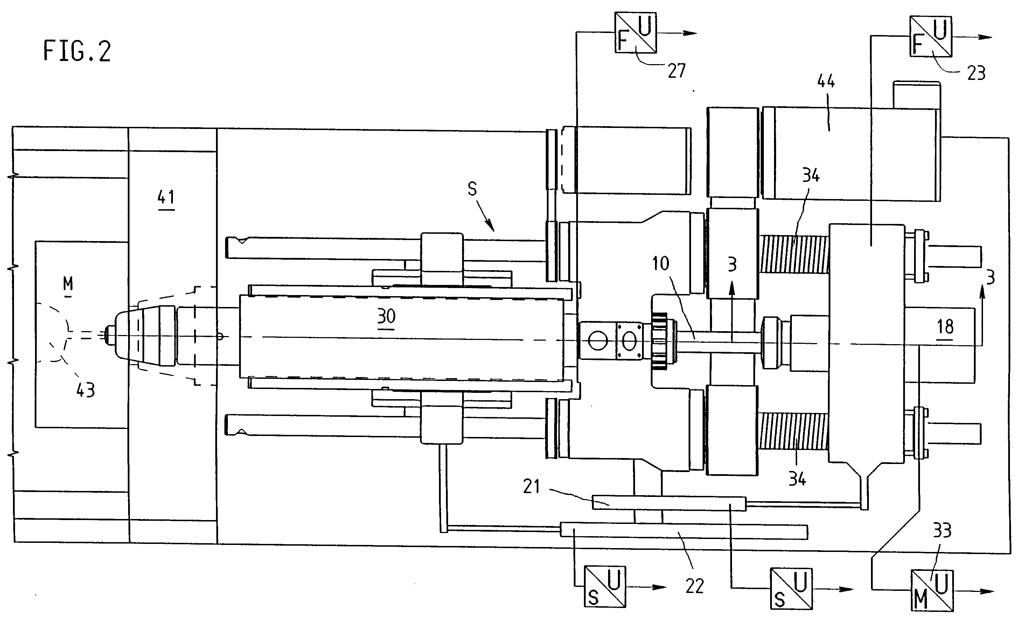

- Fig. 2: einen vergrößerten Ausschnitt aus Fig. 1 im Bereich der Spritzgießeinheit,
- Fig. 3: einen Schnitt nach Linie 3-3 von Fig. 2,
- Fig. 4: eine Darstellung gemäß Fig. 3 in einem weiteren Ausführungsbeispiel,
- Fig. 5: ein programmiertes Soll-Geschwindigkeitsprofil,
- Fig. 5a: ein programmiertes Sollkraftprofil,
- Fig. 6: ein steuerungsintern mit Rampen versehenes Soll-Geschwindigkeitsprofil,
- Fig. 7: den Verlauf einer Positionsführungsgröße über der Zeit,
- Fig. 8: den tatsächlichen Verlauf des Weges s über der Zeit t,
- Fig. 9: ein Ablaufschema für die Geschwindigkeitsregelung bzw. optional auch die Kraftregelung über dem Weg bzw. über der Zeit,
- Fig. 10: ein Schaltschema für die Beschaltung der Sensoren,
- Fig. 11: den Kraftverlauf während eines Einspritzvorgangs.

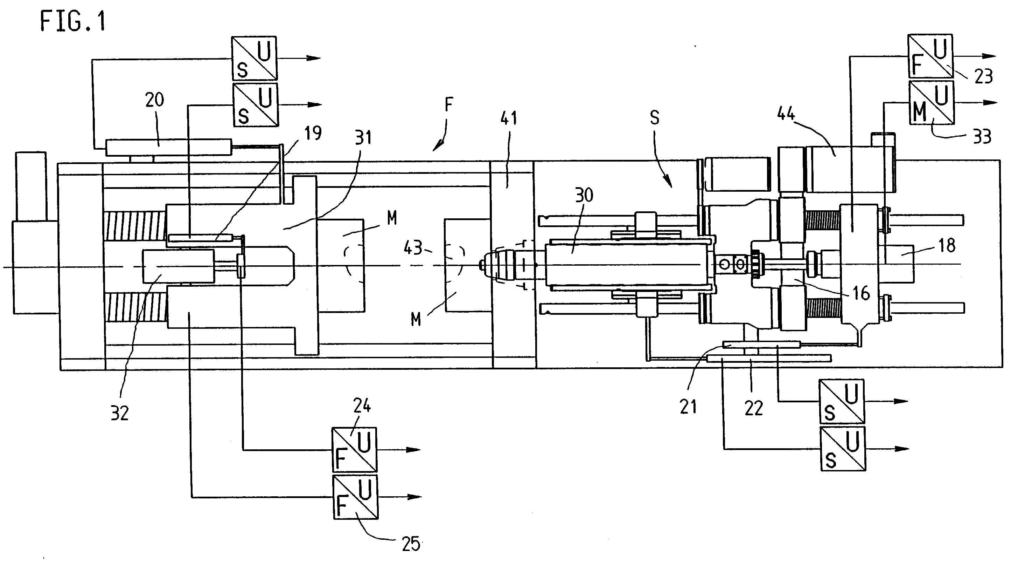

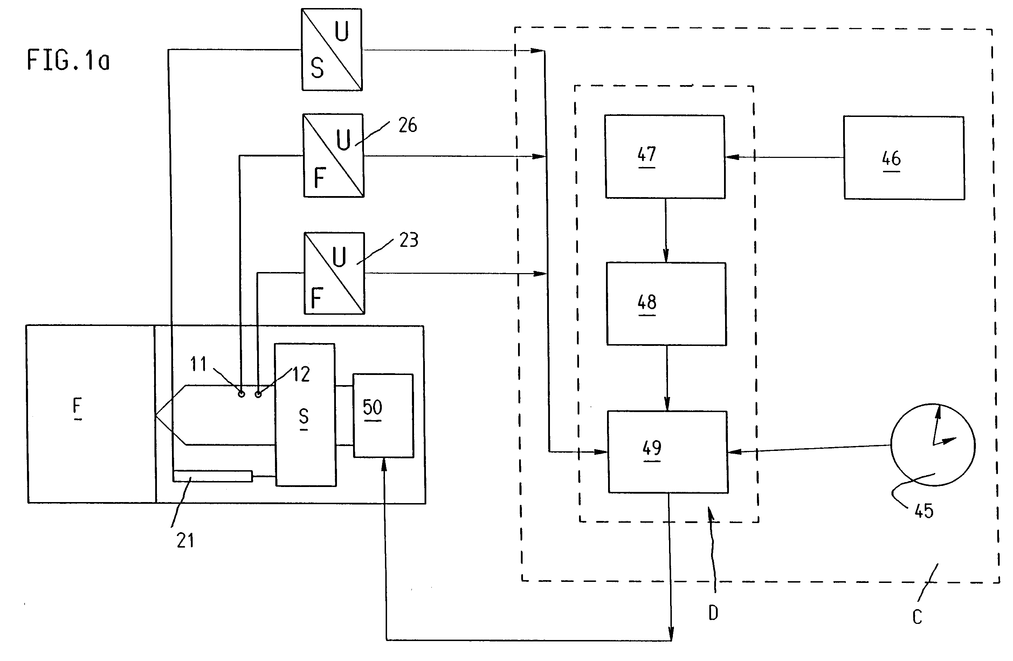

In Fig. 1 ist schematisch eine Spritzgießmaschine zur Verarbeitung plastifizierbarer Materialien wie z.B. Kunststoffe, pulvriger oder keramischer Massen, insbesondere eine Kunststoff-Spritzgießmaschine dargestellt, wobei auf der linken Seite eine Formschließeinheit F und auf der rechten Seite eine Spritzgießeinheit S dargestellt ist. Es handelt sich hierbei um eine elektromechanisch angetriebene Spritzgießeinheit, wobei z.B. über Spindeln 34 die Spritzgießeinheit bewegt wird. Der Formschließeinheit ist ein Schließmechanismus 31 zugeordnet, der hier ebenfalls über Spindeln bewegt wird, wobei selbstverständlich auch andere elektomechanische Antriebsmechanismen als auch andere Antriebsarten wie z.B. hydraulisch, pneumatisch oder dergleichen sowohl formschließseitig wie spritzgießseitig vorgesehen werden können. Beiden Seiten der Spritzgießmaschine sind Absolut-Wegmeß-Systeme zugeordnet. Formschließseitig werden Absolut-Wegmeß-Systeme 19, 20 in Form von Linearpotentiometern vorgesehen, deren Werte über Streckenspannungswandler an eine übergeordnete Steuereinheit C übergeben werden. Spritzgießseitig ist für das Anlegen der Düse am stationären Formträger 41 als Absolut-Wegmeß-System 22 das Linearpotentiometer mit zugehörigem Streckenspannungswandler und für die Bewegung der Förderschnecke das Absolut-Weg-Meßsystem 21 als Linearpotentiometer mit zugehörigem Streckenspannungswandler vorgesehen. Über einen Rotationsantrieb 18 wird im vorliegenden Fall eine als Fördermittel 10 ausgebildete Förderschnecke bewegt. Dem Rotationsantrieb 18 ist ein Momentaufnehmer 33 zugeordnet.

Die von der Sensorik ermittelten Meßwerte können im Rahmen einer Regelung oder Steuerung der Bewegung einer Bewegungseinheit einer beliebigen Bewegungsachse der Kunststoff-Spritzgießmaschine verwendet werden. In Betracht kommen hierbei z.B. spritzgießseitig der Einspritzvorgang, die Bewegung der Spritzgießeinheit zum Anlegen an die Gießform M oder formschließseitig die Formschlußbewegungen. Allgemein werden also Geschwindigkeiten oder Drücke über Weg s und Zeit t geregelt. Im folgenden soll diese Regelung oder Steuerung allerdings anhand einer Einspritzregelung oder -steuerung für das Fördermittel 10 während des Einspritzens von plastifiziertem Material in den Formhohlraum 43 der Gießform M näher erläutert werden.

Hier dient ein Antriebsmotor 44 zum axialen Bewegen des Fördermittels 10 während des Einspritzens. Gemäß Fig. 1a sind Einstellmittel 46 zum Einstellen einer Geschwindigkeit vᵢ bzw. einer Kraft Fᵢ und somit eines Druckes für eine endliche Anzahl von Geschwindigkeits-, Kraft- oder Druckstufen und ebenfalls zum Einstellen jeweils einer Änderungsposition sᵢ des Fördermittels 10 vorgesehen. An der Änderungsposition sᵢ erfolgt die Änderung der Geschwindigkeit bzw. des Druckes zwischen benachbarten Geschwindigkeits- oder Druckstufen. Die eingestellten Werte werden in Speichermitteln 47 einer Datenverarbeitungseinheit D gespeichert. Mittel 48 zur Berechnung eines Soll-Geschwindigkeitsverlaufs oder eines Soll-Druckverlaufes sind vorgesehen und ebenso sind Vergleichsmittel 49 zum Vergleich von Soll-Werten mit Ist-Werten vorgesehen, so daß sich stets vom Motorsteller 50 ein Stellwert für den Antriebsmotor 44 zur Nachführung der Spritzgießeinheit S entsprechend dem Sollverlauf erzielen läßt. Die folgenden Ausführungen werden nun anhand einer Geschwindigkeitsregelung fortgeführt. Zur Erzielung einer analogen Druckregelung oder Kraftregelung wäre der Begriff 'Geschwindigkeit' lediglich überall durch 'Druck' oder 'Kraft' zu ersetzen.

Die Geschwindigkeitsregelung wird grundsätzlich auf eine Positionsregelung zurückgeführt. Dies ist insbesondere von Vorteil, wenn an der Achse Absolut-Wegmeß-Systeme zur Position-Ist-Werterfassung vorhanden sind und keine Geschwindigkeitsaufnehmer. Jeder programmierte Gechwindigkeits-Soll-Wert wird in eine Positionsführungsgröße aufintegriert. Dabei werden maximal zulässige Beschleunigungen des Systems mit berücksichtigt. Eventuell auftretende Schleppfehler bei dem Weg-Ist-Verlauf sᵢₛₜ(t) verursacht durch äußere Einflüsse wie Momentbegrenzung, überlagerte Druckbegrenzungsregelung oder endliche, verfügbare Antriebskräfte werden spätestens am nächsten Umschaltpunkt des Geschwindigkeitsprofils eliminiert durch die Triggerung des Soll-Umschaltpunkts auf den Ist-Umschaltpunkt (vergleiche unten). Die Berechnung der Positionsführungsgröße erfolgt zielgesteuert, d.h.vorausschauend auf den nächsten Geschwindigkeitsumschaltpunkt werden mit der zulässigen Beschleunigung/Bremskraft Positionsrampen vorberechnet und mit dem Erreichen realer Positions-Ist-Werte abgestimmt, um eine Annäherung an den Soll-Geschwindigkeitsverlauf zu erhalten. Sobald die Einheit daher die Position s₁₊₁ erreicht, werden die Rampen auf der Grundlage der dann eingetretenen Zeit ᵢ₊₁ neu berechnet, oder es findet lediglich eine Istwertübernahme unter Beibehaltung der ursprünglich berechneten Rampen zeitverzögert um die Differenz tᵢ'-tᵢ statt. Unter Umständen, z.B. Bei Auswerfereinheiten, denen keine Wegmeßsysteme zugeordnet sind, kann auch lediglich die Zeit vorgegeben werden.

Die gesamte Geschwindigkeitsregelung kann somit in zwei Genauigkeitsstufen verwirklicht werden. Die erste Stufe besteht aus der Positionsführungsgrößenregelung mittels Führungsgrößentriggerung durch Vergleich mit dem Istwert vom externen Absolut-Weg-Meßsystem und nachfolgenden 'open-loop' Antriebssystem an der Achse bzw. Bewegungsachse.

Die zweite Stufe kann durch einen 'closed loop' Antrieb an der Achse verwirklicht werden, indem ein Servoantrieb mittels Absolut-Weg-Meßsystem oder Inkrementalgeber eine sogenannte Wegfeininterpolation mit Positionsregelung selbsttätig durchführt.

Wenngleich das Verfahren in bevorzugter Weise in Verbindung mit elektromechanischen Antrieben eingesetzt wird, so ist ein entsprechender Betrieb auch in Verbindung mit bekannten hydraulischen Antrieben möglich. Verschiedene Antriebe an der Kunststoff-Spritzgießmaschine werden regelungstechnisch nur durch die entsprechende 'Steifigkeit' der Achsen unterschieden, d.h. durch die zulässigen Beschleunigungen und Kräfte.

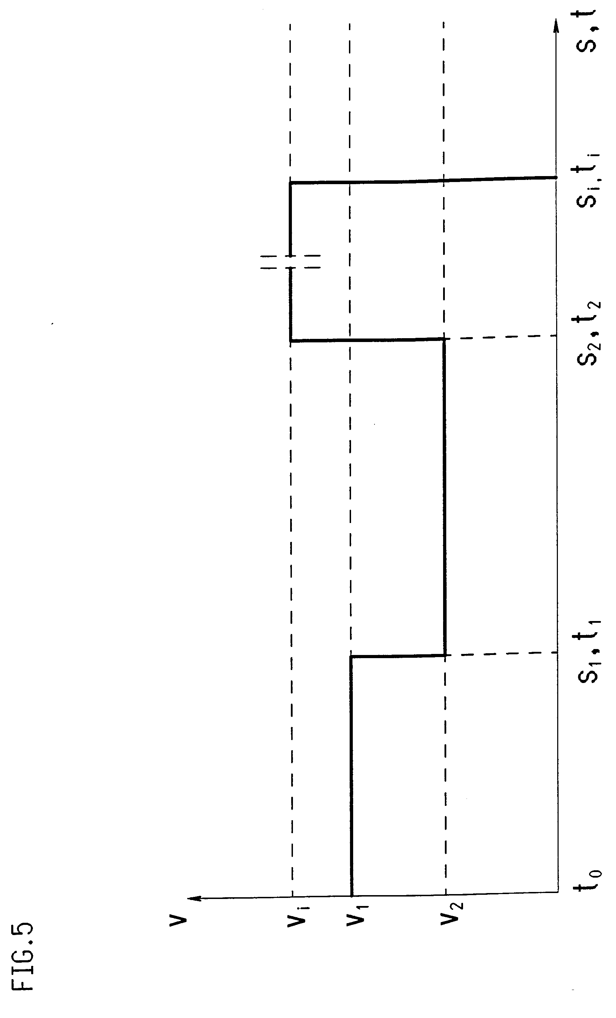

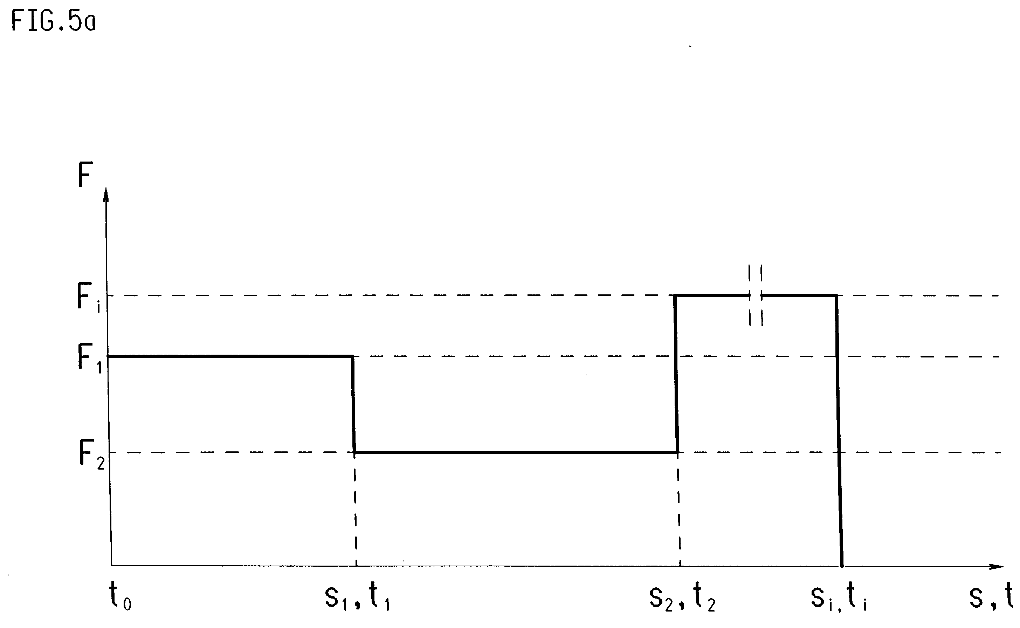

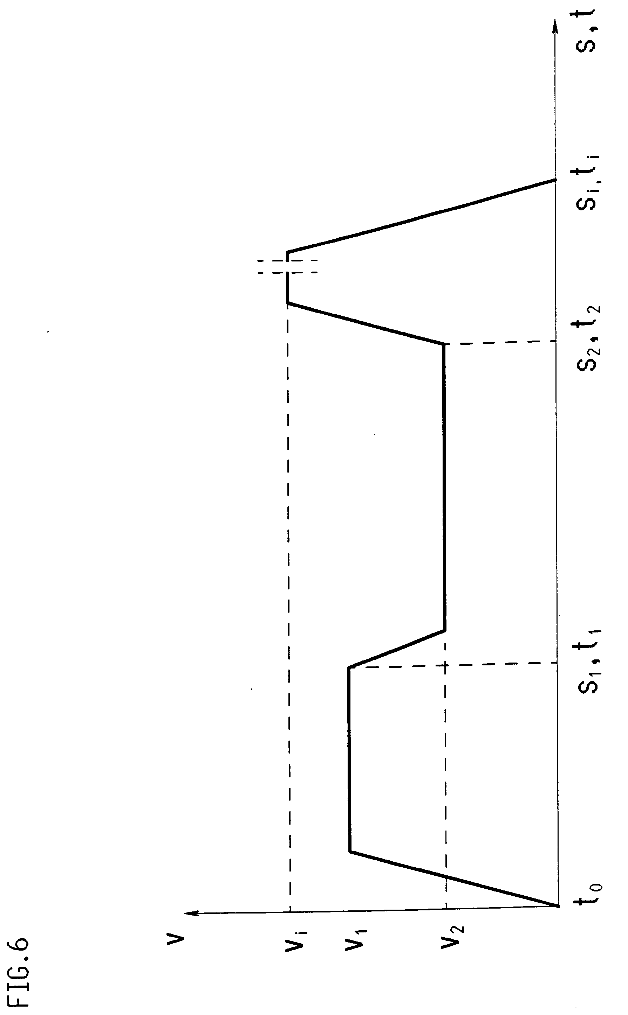

Gemäß Fig. 5 kann der Anwender verschiedene Geschwindigkeitsstufen eingeben. Diese Eingabe erfolgt z.B. über die Einstellmittel 46. Eingegeben werden Geschwindigkeiten v₁,v₂,...vᵢ zwischen verschiedenen Wegpunkten s₀, s₁, s₂, sᵢ. Fig. 5a zeigt einen entsprechenden Sollkraftverlauf bzw. Solldruckverlauf, der im folgenden jedoch auf die gleiche Weise wie in den Fig 6-8 angedeutet bearbeitet würde.

Gemäß Fig. 6 wird dieses Soll-Geschwindigkeitsprofil steuerungsintern mit Rampen versehen, um keine unendlichen Beschleunigungen oder Bremswirkungen zu erzeugen. Diese Rampen können einen linearen oder spline-artigen Charakter aufweisen, also in beliebiger Weise zwischen den Übergangspunkten interpoliert sein. Aus dem Geschwindigkeitsverlauf ermitteln sich die Mittel 48 zur Berechnung einen Soll-Verlauf des Weges s über der Zeit t. Diese Berechnung erfolgt der Einfachheit halber ohne die Berücksichtigung von dynamischen Einflüssen, wie z.B. Massenunterschieden. Durch die steuerungsintern gesetzten Rampen ergeben sich weiche Übergänge im Soll-Verlauf des Weges über der Zeit. Die Wegpunkte s₁', s₂' und sᵢ' markieren die Übergänge, an denen die Eingriffe der Rampen enden. Von diesen Punkten ab hat die Achse ihre jeweilige Soll-Geschwindigkeit erreicht und linearen Charakter. Die Rampen können beliebige Verläufe haben und an den Änderungspostionen beginnen, enden oder über diese hinweg berechnet sein. Dieser Verlauf dient als Positionsführungsgröße s_{i, soll}(t).

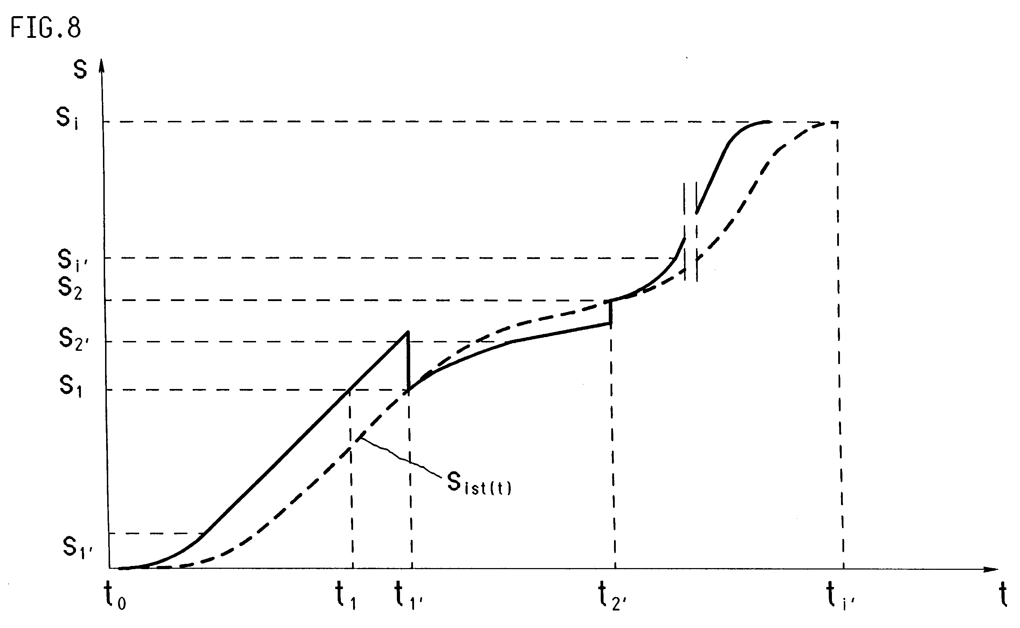

In Fig. 8 findet sich dieser Soll-Verlauf des Weges s über der Zeit t nun abschnittsweise als durchgezogene Linie wieder. Die gestrichelte Kurve spiegelt den Weg-Ist-Verlauf sᵢₛₜ (t) wieder. Da die dynamischen Einflüsse nicht berücksichtigt wurden, weicht die gestrichelte Kurve zunächst von der Ideallinie ab. Zum für die Änderungsposition s₁ z.B. ermittelten Zeitpunkt t₁ wird die Änderungsposition noch nicht erreicht. Aus diesem Grund hält man den Stellwert für den Antriebsmotor 44 und damit die lineare Geschwindigkeit solange aufrecht, bis die Änderungsposition s₁ erreicht wird, also bis die Vergleichsmittel 49 feststellen, daß das Fördermittel 10 an der Änderungsposition s₁ angekommen ist. Wird nun die Änderungsposition erreicht, so ist bereits der Zeitpunkt t₁' eingetreten und für den weiteren Soll-Verlauf wird jetzt eine Triggerung durchgeführt, indem man den für die Änderungsposition ermittelten Zeitpunkt t₁ für den weiteren Soll-Verlauf dem tatsächlichen Zeitpunkt t₁' gleichsetzt. Das gleiche erfolgt an den Stellen s₂ zum Zeitpunkt t₂' und an der Änderungsposition sᵢ zum Zeitpunkt tᵢ'.

Die Verwendung der Positionsführungsgröße hat den Vorteil, daß insbesondere bei Verwendung von Absolut-Wegmeß-Systemen 19, 20, 21 und 22 ein unmittelbarer Vergleich des vom Absolut-Wegmeß-System ermittelten Ist-Wert mit dem Soll-Wert erfolgen kann, der Regelalgorithmus, der sehr schnell laufen muß, äußerst einfach wird. Die Berechnung der Führungsgröße hingegen kann wesentlich "langsamer" erfolgen, um eine präzise laufende Maschine zu erhalten. Der Einsatz von Absolut-Wegmeß-Systemen in Form von Linearpotentiometern erspart ein aufwendiges Referenzfahren der einzelnen Achsen der Spritzgießmaschine nach Spannungsausfall oder bei Arbeitsbeginn, da das Absolut-Wegmeß-System stets sofort weiß, an welcher Stelle sich die Spritzgießeinheit befindet.

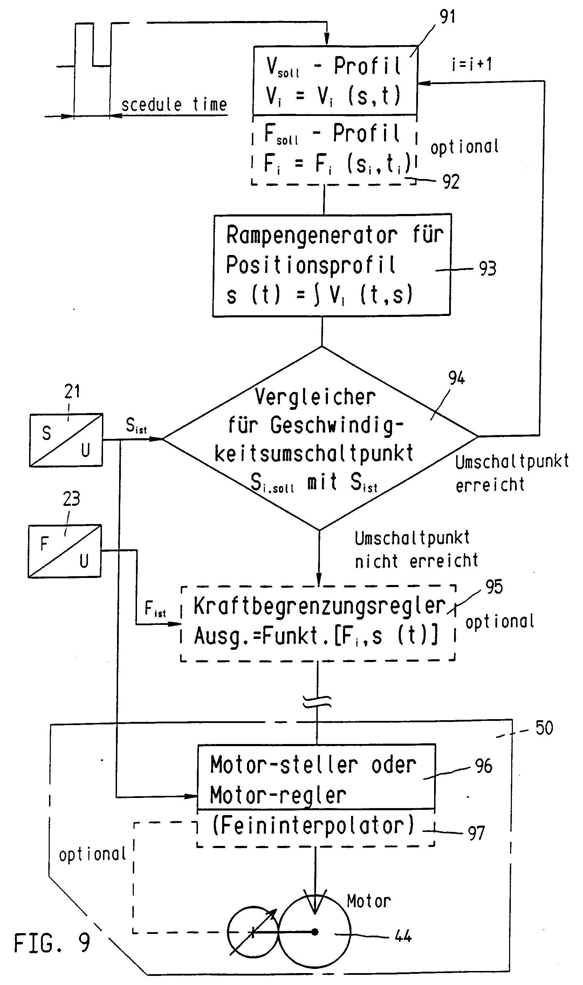

Fig. 9 zeigt ein Ablaufschema für die Geschwindigkeitsregelung bzw. alternativ oder optional auch Kraftregelung gemäß Fig. 5a bzw. Druckregelung. Die Regelung erfolgt über dem Weg s bzw. über der Zeit t. Dieses Schema mit den Schritten 91 - 97 wird periodisch in jeder scedule-time von z.B. 10 ms von der übergeordneten Steuereinheit C durchlaufen. Als Umschaltpunkt ist der Punkt angesprochen, an dem bestimmte Positionen sᵢ erreicht werden. Die Kraftregelung kann optional ausgeführt sein als übergeordnete Druckbegrenzungsregelung oder sogar als echte überlagerte Druckregelung. Im einfachsten Fall kann sie auch ganz entfallen; dann wird die Kraft (Druck) an der Achse durch das Moment bestimmt, das der Antrieb aufbringen kann. Wird bei einer Druckbegrenzungsregelung ein vorgegebener Kraftbegrenzungswert erreicht, so wird die Positionsführungsgröße abgeschwächt, indem die Kraftbegrenzungsregelung als überlagerter Regler wirkt bzw, eingreift, gegebenenfalls sogar gleichwirkend zur zuvor beschriebenen Geschwindigkeitsregelung.

Im Schritt 91 wird wie Fig. 5 erläutert, über die Einstellmittel 46 ein Geschwindigkeits-Soll-Profil vorgegeben und ermittelt. Jeder Geschwindigkeit ist ein bestimmter Zeitpunkt t oder Weg s zugeordnet. Alternativ oder ergänzend kann ein Kraft- oder Druckprofil im Schritt 92 ermittelt werden. Die so gewonnenen Profile werden wie in Fig. 6 durch einen Rampengenerator mit Rampen versehen (Schritt 93). Während des Einspritzens arbeitet dann im Schritt 94 das Vergleichsmittel 49. Eingang findet dabei der Ist-Wert sᵢₛₜ des Absolut-Wegmeß-Systems 21. Ist der Umschaltpunkt nicht erreicht, so erhält der Motorsteller oder Motorregler auch weiterhin sein Signal gemäß Schritt 96. Gemäß Schritt 95 kann optional oder alternativ ein Kraftbegrenzungsregler eingesetzt werden, der seinen Meßwert vom Kraftaufnehmer 23 erhält. Ist der Umschaltpunkt erreicht, so springt die Steuereinheit zum Schritt 91 zurück und, indem i = i + 1 gesetzt wird, setzt den Algorithmus mit dem nächsten Geschwindigkeitsstützpunkt fort.

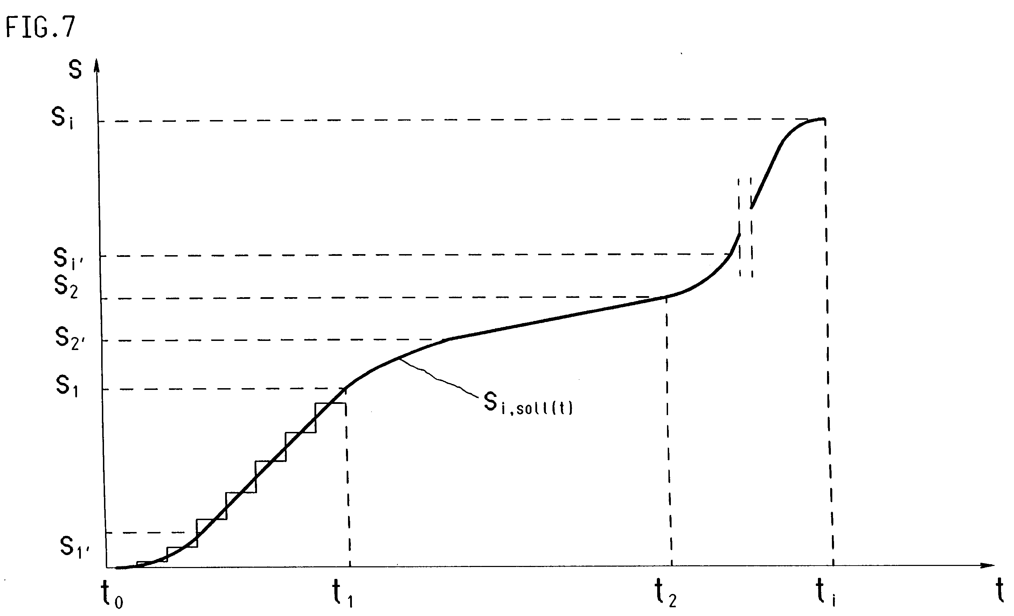

Kommt vom Inkrementalgeber im Motor oder vom Absolut-Weg-Meßsystem keine Rückmeldung über die aktuelle Lage, so ist auch eine bloße Steuerung möglich. Z.B. kann nur Start- und Endpunkt vorgegeben werden. Sobald die Bewegungsachse am Ziel ankommt, ohne dazwischen zu prüfen, was der Antrieb macht, wird dann die neue Geschwindigkeit vorgegeben. Entfallen würden damit die in Fig. 7 angedeuteten treppenartigen Zwischenschritte.

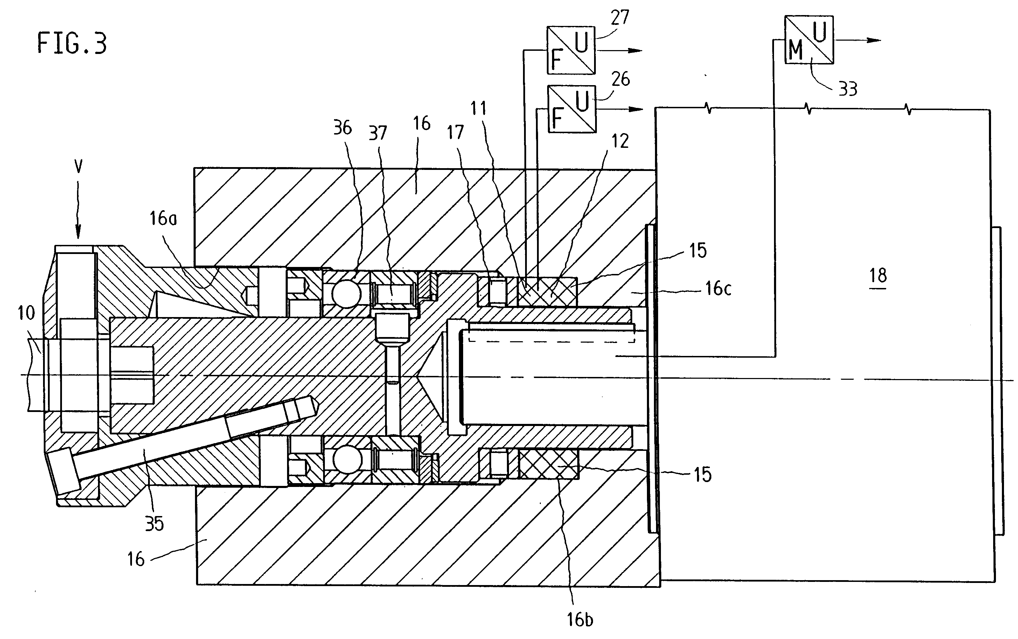

Fig. 3 zeigt in einem vergrößerten Ausschnitt nun den Lagerbereich für das Fördermittel 10. Auf der linken Seite ist hierbei ein Verriegelungsmechanismus V zu erkennen, der über Befestigungsmittel 35 mit dem Schaft des Rotationsantriebs 18 in Verbindung steht. Bezüglich der genauen Ausgestaltung dieses Verriegelungsmechanismus wird auf DE-C 42 36 282 verwiesen.

In einer Bohrung 16a der Einspritzbrücke 16 ist nun dieser Schaft an Lagern 36, 37 gelagert, wobei auf der dem stationären Formträger 41 gegenüberliegenden Seite der Einspritzbrücke 16 der Rotationsmotor 18 angeordnet ist. Im Grund der Bohrung 16a ist eine Ausnehmung 16b vorgesehen, die in Fig. 3 einen Kraftmeßring 15 aufnimmt. Im Kraftmeßring befinden sich zwei Sensoren, wobei die von diesen Sensoren ermittelten Meßwerte über die den Kraftaufnehmern 26, 27 zugeordneten Kraftspannungswandler der Steuereinheit C übermittelt werden. Ein derartiger Kraftmeßring 15 ist vor allem dann sinnvoll, wenn ein statischer in Verbindung mit einem dynamischen Sensor vorgesehen werden, da sie in diesem Fall leicht im Kraftmeßring zu integrieren sind. Der erste statische Sensor 11 dient zur Erfassung der während des Dosierens und der Materialaufbereitung auftretenden geringen Kräfte, während der dynamische Sensor 12 im restlichen Kraftbereich arbeitet, worauf weiter unten noch näher eingegangen wird. Der Kraftmeßring 15 ist zwischen dem Axialdrucklager 17 und der Anformung 16c der Einspritzbrücke 16 so angeordnet, daß er den Antriebsschaft 18a des Rotationsantriebs 18 umschließt.

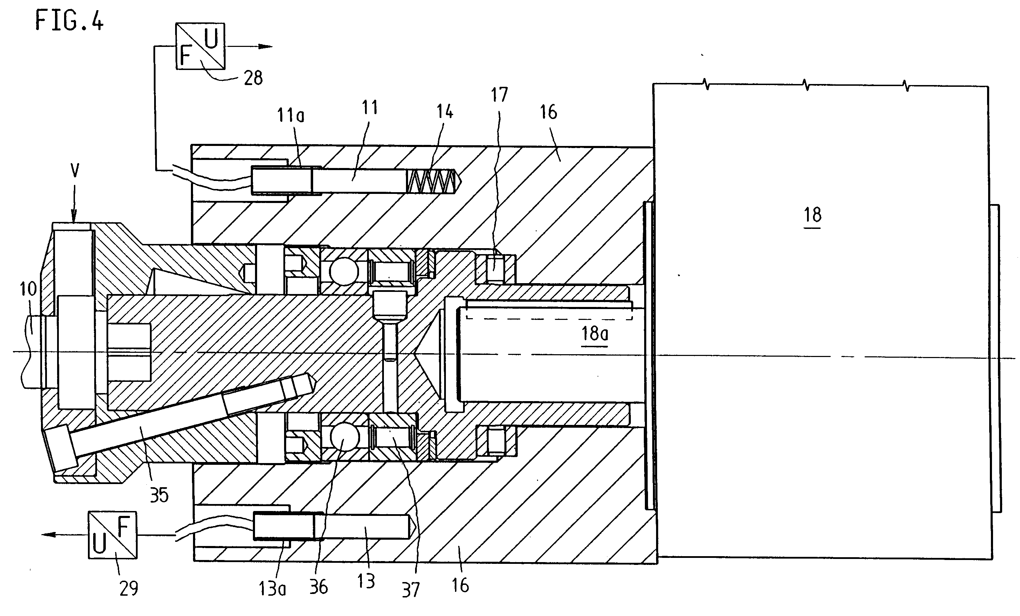

Alternativ ist eine Ausgestaltung gemäß Fig. 4 möglich. Hierbei ist ein erster statischer Sensor 11 vorgesehen, der durch eine Feder 14 federbelastet ist. Der Sensor ist wie der zweite statische Sensor 13 mit Gewindeabschnitten 11a, 13a mit der Einspritzbrücke verschraubt. Verformungen der Einspritzbrücke 16 führen zu Meßwerten der Sensoren. Die Federkraft der Feder 14 verhält sich degressiv und ist auf einen vorbestimmten Grenzwert F1 so abgestimmt, daß bei Überschreiten dieses Grenzwerts der erste statische Sensor aus dem Kraftfluß dadurch ausgekoppelt wird, daß die Feder die Übertragung weiterer Verformungen und damit Kräfte auf den ersten statischen Sensor 11 unterbindet. Dadurch wird eine Zerstörung des Sensors bei maximaler Einspritzkraft verhindert, wobei die Feder 14 wie ein Bypass wirkt. Der erste statische Sensor 11 übernimmt somit einen Meßbereich kleinerer Kräfte von z.B. 1% - 25% der Maximalkräfte, vorzugsweise einen Kraftbereich der üblicherweise während des Dosierens nicht überschritten wird. Im darüberliegenden Kraftbereich arbeitet dann ein weiterer Sensor als zweiter statischer Sensor 13. Der erste statische Sensor 11 gibt ein Signal über den Kraftaufnehmer 28 und der zweite statische Sensor 13 ein Signal über den Kraftaufnehmer 29 an die Steuereinheit. Die Sensoren können als Dehnungs-Meßstreifen ausgebildet werden. In beiden Fällen können die Sensoren justiert bzw. entsprechend vorgespannt werden, um sowohl Zugkräfte als auch Druckkräfte messen zu können. Dadurch ist gewährleistet, daß eine Überwachung bzw. Regelung oder Steuerung während des gesamten Spritzzyklus möglich ist.

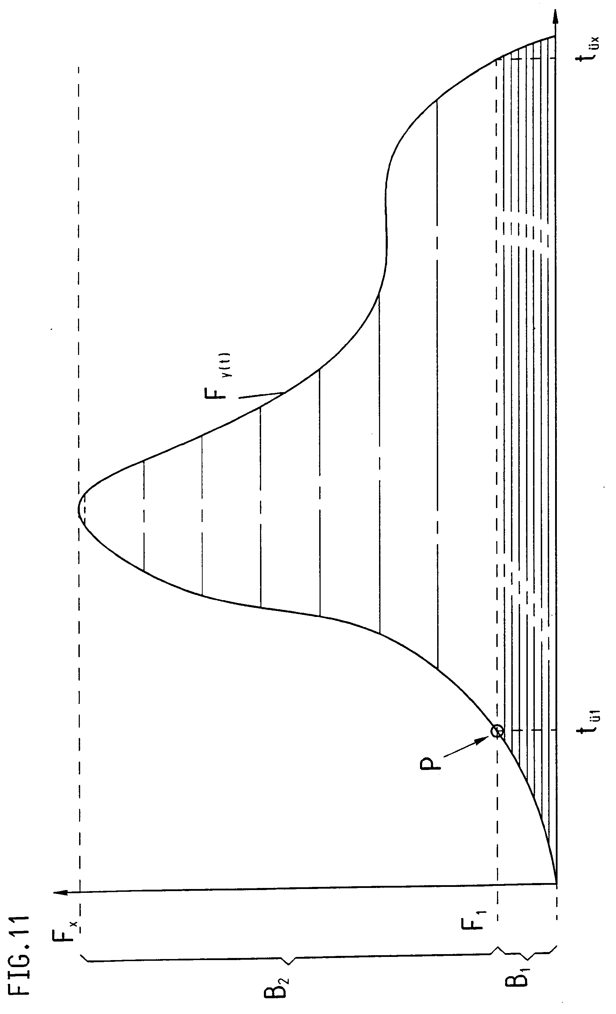

Mit den Sensoren werden die an dem Fördermittel 10 der Spritzgießeinheit S auftretenden Kräfte, die kennzeichnend sind für einen Druck, der vom zu verarbeitenden Material auf das Fördermittel 10 ausgeübt wird, z.B. zur Verwertung im Rahmen einer Einspritzregelung erfaßt. Wenigstens ein erster statischer Sensor 11 besitzt eine hohe Auflösung und dient im wesentlichen zur Erfassung der während der Materialaufbereitung auftretenden Kräfte in Form eines ersten Meßwertes. Diesem ersten statischen Sensor 11 ist ein weiterer Kraftsensor in Form eines zweiten statischen Sensors 13 oder eines dynamischen Sensors 12 zugeordnet, der im wesentlichen die während des Einspritzens auftretenden Kräfte in Form eines zweiten Meßwerts erfaßt. Ein Umschalten oder Übergeben erfolgt an einem Übergabepunkt P (Fig. 11), sobald der erste Meßwert einen vorbestimmten Grenzwert F1 erreicht. Zum Übergabepunkt P übergibt z.B. zur Zeit t_{ü1} der erste statische Sensor 11 die weitere Erfassung der Kraft an den weiteren Sensor, wobei an diesem Punkt die Kraft feststeht, so daß zugleich der weitere Sensor geeicht oder genullt werden kann. Insbesondere für einen dynamischen Sensor 12 ergibt sich somit ein Loslaufpunkt, so daß in jedem Spritzzyklus ein Reset des dynamischen Sensors erfolgt, so daß ein Wegdriften des Meßwerts bzw. Sensorsignals vermieden wird. Der dynamische Sensor 12 oder der zweite statische Sensor 13 ist dann aber geeignet, die gegenüber den bei der Materialaufbereitung auftretenden hohen Einspritzkräfte zu erfassen.

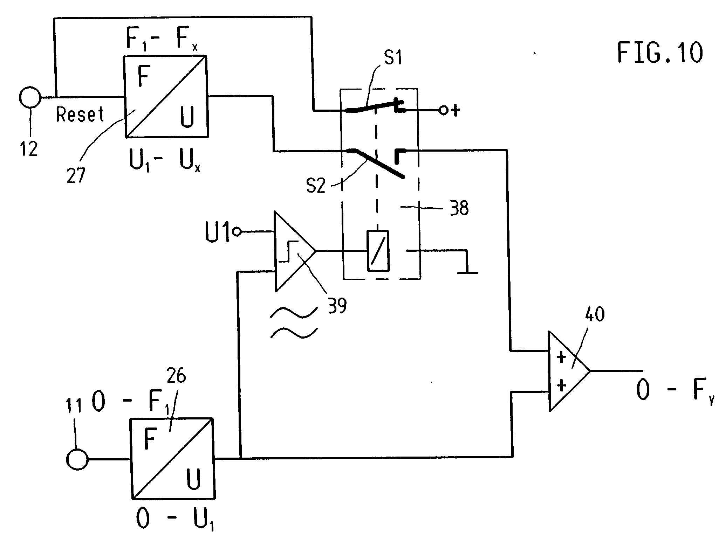

Fig. 10 zeigt die Wirkungsweise der in den Fign. 3 und 4 gezeigten Anwendung von zwei Sensoren. Der erste statische Sensor 11 liefert über den Kraftaufnehmer 26 einen Meßwert, der dem Vergleicher 39 zugeleitet wird und dort mit einem Referenzwert verglichen wird, der einem vorbestimmten Grenzwert F1 entspricht. Je nach Ergebnis dieses Vergleichs ist der zweite Meßwert des dynamischen Sensors 12 noch nicht zugeschaltet, in diesem Fall ergibt sich eine Stellung der Schalter S1, S2 gemäß dem Schema. Somit ergibt sich im Summierer 40 lediglich der erste Meßwert, der vom ersten statischen Sensor 11 ermittelt wird. Wird der vorbestimmte Grenzwert erreicht, gibt das Steuermittel 38 ein Signal an die Schalter S1, S2. Somit wird Schalter S1 geöffnet und der Kraftaufnehmer 27 verläßt den Resetzustand. Von nun an gibt auch der dynamische Sensor 12 mittels des Kraftaufnehmers 27 einen zweiten Meßwert ab. Im Summierer 40 stehen nun zwei Meßwerte an, die miteinander addiert werden, so daß sich auch oberhalb des vorbestimmten Grenzwertes F1 bis zur maximalen Einspritzkraft Fx ein durchgängiges Meßergebnis von Null bis Fx ergibt. Dies führt zu der geforderten Bereichseinteilung. Im Beispiel der Fig. 3 sitzt diese Auswertelogik schon im Kraftmeßring, so daß die Steuerung von dieser Entscheidung entlastet wird. In Fig. 4 sitzt die Auswertelogik z.B. im zeichnerisch nicht dargestellten Schaltschrank.

Aus Fig. 11 läßt sich eine entsprechende Kraftmeßbereichs-Aufteilung entnehmen. Im Meßbereich B1 der Kraft F von Null bis F1 arbeitet der statische Sensor 11, während darüber im Meßbereich oberhalb des vorbestimmten Grenzwertes F1 bis zur maximalen Einspritzkraft Fx der weitere Sensor arbeitet. Am Übergabepunkt P zur Zeit t_{ü1} erfolgt eine Übergabe und im gesamten darauffolgenden Bereich bis zum Zeitpunkt t_{üx} wird die Kraft im wesentlichen durch den weiteren Sensor in Form des Kraft-Zeitverlaufes F_{y(t)} ermittelt. Nach dem Zeitpunkt t_{üx} wird die 'Arbeit' wieder an den ersten statischen Sensor 11 übergeben.

Es versteht sich von selbst, daß diese Beschreibung verschiedensten Modifikationen, Änderungen und Anpassungen unterworfen werden kann, dies im Bereich von Äquivalenzen zu den anhängenden Ansprüchen bewegen.

## Patentansprüche

1. Verfahren zur Regelung oder Steuerung einer Spritzgießmaschine zur Verarbeitung plastifizierbarer Materialien mit
- einem Antriebsmotor (44) zum Bewegen einer Bewegungseinheit,
- einem Einstellmittel (46) zum Einstellen je einer Geschwindigkeit (vᵢ) für eine endliche Anzahl von Geschwindigkeitsstufen und zum Einstellen je einer Änderungsposition (sᵢ), an der die Änderung der Geschwindigkeit (vᵢ) der Bewegungseinheit zwischen benachbarten Geschwindigkeitsstufen erfolgen soll,
- Speichermitteln (47) zum Speichern der von den Einstellmitteln eingestellten Werte,
- Mitteln (48) zur Berechnung eines Soll-Geschwindigkeitsverlaufs anhand der von den Einstellmitteln (46) eingestellten Werte unter Bildung von Übergangsrampen zwischen den benachbarten Geschwindigkeitsstufen im Bereich der Änderungsposition (sᵢ), wobei die Mittel (48) zur Berechnung einen Sollverlauf des Weges (s) über der Zeit (t) zur Festlegung einer Positionsführungsgröße (s_{i,soll}(t)) für die Geschwindigkeitsregelung oder -steuerung erstellen,
- Positionserfassungsmitteln (21) zum Erfassen der tatsächlichen Position der Bewegungseinheit,
- Zeiterfassungsmitteln (45) zur Erfassung von Zeitpunkten während der Bewegung der Bewegungseinheit,
- Vergleichsmitteln (49) zum Vergleich von Soll-Werten mit Ist-Werten zur Ermittlung eines Stellwerts zur Nachführung der Bewegungseinheit an dem Soll-Geschwindigkeitsverlauf,
dadurch gekennzeichnet, daß zum für die Änderungsposition (sᵢ) ermittelten Zeitpunkt (tᵢ) der die Geschwindigkeit des Antriebsmotors (44) bestimmende Stellwert solange beibehalten wird, bis die Vergleichsmittel (49) feststellen, daß die Bewegungseinheit die Änderungsposition (sᵢ) erreicht hat,
und daß bei Erreichen der Änderungsposition (sᵢ) der Ist-Umschaltzeitpunkt (tᵢ') dem für die Änderungsposition ermittelten Zeitpunkt (tᵢ) für den weiteren Sollverlauf gleichgesetzt und der Stellwert angepaßt wird.

2. Verfahren nach Anspruch 1, dadurch gekennzeichnet, daß die Bewegungseinheit eine Bewegungsachse der Formschließeinheit (F) ist.

3. Verfahren nach Anspruch 1, dadurch gekennzeichnet, daß die Bewegungseinheit eine Bewegungsachse der Spritzgießeinheit ist.

4. Verfahren nach Anspruch 1, dadurch gekennzeichnet, daß die Bewegungseinheit ein Fördermittel (10) zum Einspritzen des plastifizierten Materials in den Formhohlraum (43) einer Gießform (M) ist, das vom Antriebsmotor (44) während des Einspritzens bewegt wird,
daß die Geschwindigkeit (vᵢ) die Einspritzgeschwindigkeit des Fördermittels (10) und die Änderungsposition (sᵢ) die jeweilige Änderungsposition des Fördermittels ist und
daß die Zeiterfassungsmittel (45) Zeitpunkte beginnend an einem Zeitpunkt (t₀), an dem der Einspritzvorgang beginnt, zumindest bis zu einem Zeitpunkt (tᵢ), zu dem der Einspritzvorgang abgeschlossen ist, erfassen.

5. Verfahren nach Anspruch 1, dadurch gekennzeichnet, daß die Mittel (48) zur Berechnung des Soll-Geschwindigkeitsverlaufs die Übergangsrampen unter Heranziehung vorgegebener Beschleunigungs- oder Verzögerungswerte vorausschauend auf die nächste Änderungsposition (sᵢ) berechnen und, sobald die Bewegungseinheit diese Änderungsposition (sᵢ) erreicht, auf der Grundlage des Zeitpunktes (tᵢ') zur Annäherung an den Soll-Geschwindigkeitsverlauf neu berechnen oder den zuvor berechneten, noch verbleibenden Soll-Geschwindigkeitsverlauf aufsetzen.

6. Verfahren nach Anspruch 1, dadurch gekennzeichnet, daß die Positionsführungsgrößen (s_{i,soll}(t)) im Regelkreis mit einem Meßwert für die tatsächliche Position (sᵢₛₜ) verglichen wird, der von Absolut-Weg-Meßsystemen ermittelt wird.

7. Verfahren nach Anspruch 1, dadurch gekennzeichnet, daß als Antriebsmotor (44) ein elektrischer Antriebsmotor vorgesehen wird und daß als Fördermittel (10) eine Förderschnecke vorgesehen ist, die von einem Rotationsantrieb (18) gedreht wird.

8. Verfahren nach Anspruch 1, dadurch gekennzeichnet, daß eine Kraftbegrenzungsregelung der Geschwindigkeitsregelung überlagert ist.

9. Verfahren zur Regelung oder Steuerung einer Spritzgießmaschine zur Verarbeitung plastifizierbarer Materialien mit
- einem Antriebsmotor (44) zum Bewegen einer Bewegungseinheit,
- einem Einstellmittel (46) zum Einstellen je eines Drucks für eine endliche Anzahl von Druckstufen und zum Einstellen je einer Änderungsposition (sᵢ), an der die Änderung des Drucks zwischen benachbarten Druckstufen erfolgen soll,
- Speichermitteln (47) zum Speichern der von den Einstellmitteln eingestellten Werte,
- Mitteln (48) zur Berechnung eines Soll-Druckverlaufs anhand der von den Einstellmitteln (46) eingestellten Werte unter Bildung von Übergangsrampen zwischen den benachbarten Druckstufen im Bereich der Änderungsposition (sᵢ),
- Druckerfassungsmitteln (23,26) zum Erfassen des tatsächlichen Drucks,
- Zeiterfassungsmitteln (45) zur Erfassung von Zeitpunkten während der Bewegung der Bewegungseinheit,
- Vergleichsmitteln (49) zum Vergleich von Soll-Werten mit Ist-Werten zur Ermittlung eines Stellwerts zur Nachführung der Bewegungseinheit an den Soll-Druckverlauf,
dadurch gekennzeichnet, daß die Mittel zur Berechnung (48) einen Soll-Verlauf des Drucks über der Zeit (t) zur Festlegung einer Druckführungsgröße für die Druckregelung oder -steuerung erstellen,
daß zum für die Änderungsposition (sᵢ) ermittelten Zeitpunkt (tᵢ) der den Druck bestimmende Stellwert solange beibehalten wird, bis die Vergleichsmittel (49) feststellen, daß die Bewegungseinheit die Änderungsposition (sᵢ) erreicht hat,
und daß bei Erreichen der Änderungsposition (sᵢ) der Ist-Umschaltzeitpunkt (tᵢ') dem für die Änderungsposition ermittelten Zeitpunkt (tᵢ) für den weiteren Sollverlauf gleichgesetzt und der Stellwert angepaßt wird.

10. Verfahren nach Anspruch 9, dadurch gekennzeichnet, daß als Antriebsmotor (44) ein elektrischer Antriebsmotor vorgesehen wird und daß als Bewegungseinheit eine Förderschnecke vorgesehen ist, die von einem Rotationsantrieb (18) gedreht wird.

11. Verfahren zur Regelung oder Steuerung einer Spritzgießmaschine zur Verarbeitung plastifizierbarer Materialien mit
- einem Antriebsmotor (44) zum Bewegen einer Bewegungseinheit,
- einem Einstellmittel (46) zum Einstellen je einer Kraft für eine endliche Anzahl von Kraftstufen und zum Einstellen je einer Änderungsposition (sᵢ), an der die Änderung der Kraft zwischen benachbarten Kraftstufen erfolgen soll,
- Speichermitteln (47) zum Speichern der von den Einstellmitteln eingestellten Werte,
- Mitteln (48) zur Berechnung eines Soll-Kraftverlaufs anhand der von den Einstellmitteln (46) eingestellten Werte unter Bildung von Übergangsrampen zwischen den benachbarten Kraftstufen im Bereich der Änderungsposition (sᵢ),
- Krafterfassungsmitteln (23,26) zum Erfassen der tatsächlichen Kraft,
- Zeiterfassungsmitteln (45) zur Erfassung von Zeitpunkten während der Bewegung der Bewegungseinheit,
- Vergleichsmitteln (49) zum Vergleich von Soll-Werten mit Ist-Werten zur Ermittlung eines Stellwerts zur Nachführung der Bewegungseinheit an den Soll-Kraftverlauf,
dadurch gekennzeichnet, daß die Mittel zur Berechnung (48) einen Soll-Verlauf der Kraft (F) über der Zeit (t) zur Festlegung einer Kraftführungsgröße für die Kraftregelung oder -steuerung erstellen,
daß zum für die Änderungsposition (sᵢ) ermittelten Zeitpunkt (tᵢ) der die Kraft bestimmende Stellwert solange beibehalten wird, bis die Vergleichsmittel (49) feststellen, daß die Bewegungseinheit die Änderungsposition (sᵢ) erreicht hat,
und daß bei Erreichen der Änderungsposition (sᵢ) der Ist-Umschaltzeitpunkt (tᵢ') den für die Änderungsposition ermittelten Zeitpunkt (tᵢ) für den weiteren Sollverlauf gleichgesetzt und der Stellwert angepaßt wird.

12. Verfahren nach Anspruch 11, dadurch gekennzeichnet, daß als Antriebsmotor (44) ein elektrischer Antriebsmotor vorgesehen wird und daß als Bewegungseinheit eine Förderschnecke vorgesehen ist, die von einem Rotationsantrieb (18) gedreht wird.

13. Verfahren nach Anspruch 8, dadurch gekennzeichnet, daß die Kraftbegrenzungsregelung gemäß Anspruch 11 durchgeführt wird.

## Claims

1. Method for regulating or controlling of an injection moulding machine for processing plastifiable materials comprising
• a drive motor (44) for displacing a movement unit,
• an adjusting means (46) for adjusting respectively one speed (vᵢ) for a limited number of speed steps and for adjusting respectively one modification position (sᵢ), at which the modification of the speed (vᵢ) of the movement unit between contiguous speed steps should be effected,
• storing means (47) for storing the values adjusted by the adjusting means,
• means (48) for calculation of a reference-speed-curve based on the values adjusted by the adjusting means (46) by production of transition ramps between the contiguous speed steps in the area of the modification position (sᵢ), wherein the means for calculation (48) generate a reference curve of the path (s) over the time (t) for determination of a position reference variable (s_{i,ref}(t)), for the speed regulation or control,
• position detecting means (21) for detecting the actual position of the movement unit,
• time detecting means (45) for detection of times during the displacement of the movement unit,
• comparison means (49) for comparison of reference values with actual values for detection of a set value for tracking the movement unit to the reference-speed-curve,
characterised in that at the time (tᵢ) detected for the modification position (sᵢ), the set value which determines the speed of the drive motor (44) is maintained until the comparison means (49) determine that the movement unit has reached the modification position (sᵢ),
and in that when the modification position (sᵢ) is reached, the actual-switching-time (tᵢ') is equated for the further reference curve to the time (tᵢ) detected for the modification position and the adjusting value is adjusted.

2. Method according to claim 1, characterised in that the movement unit is a movement axis of the mould closing unit (F).

3. Method according to claim 1, characterised in that the movement unit is a movement axis of the injection moulding unit.

4. Method according to claim 1, characterised in that the movement unit is a feeding means (10) for injecting the plastifiable material into the mould cavity (43) of a casting mould (M), said material being moved by the drive motor (44) during the injection process,
in that the speed (vᵢ) is the injection speed of the feeding means (10) and the modification position (sᵢ) the respective modification position of the feeding means and
in that the time detecting means (45) detect times starting from a time (tₒ), at which the injection process begins, until at least a time (tᵢ), at which the injection process is finished.

5. Method according to claim 1, characterised in that the means (48) for calculation of the reference-speed-curve calculate the transition ramps by referring to pre-determined speed- or retardation-values looking ahead to the next modification position (sᵢ) and, as soon as the movement unit has reached this modification position (sᵢ), calculate them again on the basis of the time (tᵢ') for approximation to the reference-speed-curve or set up the formerly calculated, still remaining reference-speed-curve.

6. Method according to claim 1, characterised in that the position reference variable (S_{i,ref}(t)) is compared in the regulating cycle with a measured value for the actual position (s_{act}), which is detected by absolute-path-measuring-systems.

7. Method according to claim 1, characterised in that an electrical drive motor is provided as drive motor (44) and in that a feed screw rotated by a rotational drive (18) is provided as feeding means (10).

8. Method according to claim 1, characterised in that a force limiting regulation is superimposed upon the speed regulation.

9. Method for regulating or controlling of an injection moulding unit for processing plastifiable materials comprising
• a drive motor (44) for displacing a movement unit,
• an adjusting means (46) for adjusting respectively one pressure for a limited number of pressure steps and for adjusting respectively one modification position (sᵢ) at which the modification of the pressure between contiguous pressure steps should be effected,
• storing means (47) for storing the values adjusted by the adjusting means,
• means (48) for calculation of a reference-pressure-curve based on the values adjusted by the adjusting means (46) by production of transition ramps between the contiguous pressure steps in the area of the modification position (sᵢ),
• pressure detecting means (23, 26) for detecting the actual pressure,
• time detecting means (45) for detecting times during the displacement of the movement unit,
• comparison means (49) for comparison of reference values with actual values for determination of an adjusting value for tracking the movement unit to the reference-pressure-curve,
characterised in that the means for calculation (48) generate a reference curve of the pressure over the time (t) for determination of a pressure reference variable for the pressure regulation or -control,
in that at the time (tᵢ) detected for the modification position (sᵢ), the set value which determines the pressure is maintained until the comparison means (49) determine that the movement unit has reached the modification position (s),
and in that when the modification position (sᵢ) is reached, the actual-switching-time (tᵢ') is equated for the further reference curve to the time (tᵢ) detected for the modification position and the set value is adjusted.

10. Method according to claim 9, characterised in that an electrical drive motor is provided as drive motor (44) and in that a feed screw, which is rotated by a rotational drive (18), is provided as a movement unit.

11. Method for regulating or controlling an injection moulding machine for processing plastifiable materials comprising
• a drive motor (44) for displacing a movement unit,
• an adjusting means (46) for adjusting respectively one force for a limited number of force steps and for adjusting respectively one modification position (sᵢ) at which the modification of the force between contiguous force steps should be effected,
• storing means (47) for storing the values adjusted by the adjusting means,
• means (48) for calculation of a reference-force-curve based on the values adjusted by the adjusting means (46) by production of transition ramps between the contiguous force steps in the area of the modification position (sᵢ),
• force detecting means (23, 26) for detecting the actual force,
• time detection means (45) for detecting times during the displacement of the movement unit,
• comparison means (49) for comparison of the reference values with the actual values for determination of a set value for tracking the movement unit to the reference-force curve,
characterised in that the means for calculation (48) generate a reference curve of the force (F) over the time (t) for determination of a force reference variable for the force regulation or -control,
in that at the time (tᵢ) detected for the modification position (sᵢ), the set value which determines the force is maintained until the comparison means (49) determine that the movement unit has reached the modification position (sᵢ) and
in that when the modification position (sᵢ) has been reached the actual-switching-time (tᵢ') is equated for the further reference curve to the time (tᵢ) detected for the modification position and the adjusting value is adjusted.

12. Method according to claim 11, characterised in that an electrical drive motor is provided as drive motor (44) and in that a feed screw, which is rotated by a rotational drive (18), is provided as a movement unit.

13. Method according to claim 8, characterised in that the force limiting regulation is realised according to claim 11.

## Revendications

1. Procédé de régulation ou de commande d'une presse d'injection pour le traitement de matières plastifiables, comportant
- un moteur d'entraînement (44) destiné à déplacer une unité de déplacement,
- un moyen de réglage (46) pour le réglage d'une vitesse (vᵢ) pour un nombre fini de vitesses et pour le réglage d'une position de variation (sᵢ) à laquelle doit avoir lieu la variation de la vitesse (vᵢ) de l'unité de déplacement entre des vitesses voisines,
- des moyens de mémorisation (47) pour la mémorisation des valeurs réglées par les moyens de réglage,
- des moyens (48) pour le calcul d'une courbe de vitesse de consigne à l'aide des valeurs réglées par les moyens de réglage (46), par formation de rampes de transition entre les vitesses voisines dans la région de la position de variation (sᵢ), les moyens (48) de calcul produisant une variation de consigne de la distance (s) en fonction du temps (t), afin de fixer une grandeur de guidage de position (s_{i, soll}(t)) pour la régulation ou la commande de la vitesse,
- des moyens de détection de position (21) pour la détection de la position effective de l'unité de déplacement,
- des moyens de détection du temps (45) pour détecter des instants pendant le déplacement de l'unité de déplacement,
- des moyens de comparaison (49) pour la comparaison entre des valeurs de consigne et des valeurs réelles afin de déterminer une valeur de réglage pour que l'unité de déplacement suive la courbe de vitesse de consigne,
caractérisé en ce qu'à l'instant (tᵢ), déterminé pour la position de variation (sᵢ), la valeur de réglage, déterminant la vitesse du moteur d'entraînement (44), est maintenue, jusqu'à ce que les moyens de comparaison (49) constatent que l'unité de déplacement a atteint la position de variation (sᵢ),
et en ce que lorsqu'est atteinte la position de variation (sᵢ), l'instant de commutation réel (t_{i'}) est posé égal à l'instant (tᵢ) pour la suite de la courbe de consigne et est adapté à la valeur de réglage.

2. Procédé selon la revendication 1, caractérisé en ce que l'unité de déplacement est un axe de déplacement de l'unité de fermeture de moule (F).

3. Procédé selon la revendication 1, caractérisé en ce que l'unité de déplacement est un axe de déplacement de l'unité de moulage par injection.

4. Procédé selon la revendication 1, caractérisé en ce que l'unité de déplacement est un moyen de transport (10) pour injecter la matière plastifiée dans la cavité (43) d'un moule (M), qui est déplacé par le moteur d'entraînement (44) pendant l'injection,
en ce que la vitesse (vᵢ) est la vitesse d'injection du moyen de transport (10) et la position de variation (sᵢ) est la position de variation respective du moyen de transport et
en ce que les moyens de détection de temps (45) détectent des instants commençant à un instant (t₀), auquel commence l'opération d'injection au moins jusqu'à un instant (tᵢ) auquel l'opération d'injection est terminée.

5. Procédé selon la revendication 1, caractérisé en ce que les moyens (48) destinés au calcul de la courbe de vitesse de consigne calculent les rampes de transition, en utilisant des valeurs d'accélération ou des valeurs de temporisation données, et en prévoyant la position de variation (sᵢ) suivante et, dès que l'unité de déplacement atteint cette position de variation (sᵢ), ils les calculent à nouveau sur la base de l'unité (t_{i'}) pour s'approcher de la courbe de vitesse de consigne ou ils posent la courbe de vitesse de consigne préalablement calculée, restant encore.

6. Procédé selon la revendication 1, caractérisé en ce que les grandeurs de guidage de position (s_{i, soll}(t)) sont comparées dans le circuit de régulation à une valeur de mesure pour la position effective (sᵢₛₜ), qui est déterminée par des systèmes de mesure de distance absolue.

7. Procédé selon la revendication 1, caractérisé en ce qu'il est prévu comme moteur d'entraînement (44) un moteur d'entraînement électrique et en ce que comme moyen de transport (10), il est prévu une vis sans fin de transport, qui est mise en rotation par un dispositif d'entraînement en rotation (18).

8. Procédé selon la revendication 1, caractérisé en ce qu'une régulation de limitation de force est superposée à la régulation de vitesse.

9. Procédé de régulation ou de commande d'une presse d'injection pour le traitement de matières plastifiables, comportant
- un moteur d'entraînement (44) destiné à déplacer une unité de déplacement,
- un moyen de réglage (46) pour le réglage d'une pression pour un nombre fini de pressions et pour le réglage d'une position de variation (sᵢ) à laquelle doit avoir lieu la variation de la pression entre des pressions voisines,
- des moyens de mémorisation (47) pour la mémorisation des valeurs réglées par les moyens de réglage,
- des moyens (48) pour le calcul d'une courbe de pression de consigne à l'aide des valeurs réglées par les moyens de réglage (46) en formant des rampes de transition entre les pressions voisines, dans la région de la position de variation (sᵢ),
- des moyens de détection de pression (23,26) destinés à détecter la pression effective,
- des moyens de détection du temps (45) pour la détection d'instants pendant le déplacement de l'unité de déplacement,
- des moyens de comparaison (49) pour la comparaison entre des valeurs de consigne et des valeurs réelles afin de déterminer une valeur de réglage pour que l'unité de déplacement suive la courbe de variation de consigne,
caractérisé en ce que les moyens de calcul (48) produisent une courbe de consigne de la pression en fonction du temps (t) pour définir une grandeur de guidage de pression pour la régulation ou la commande de la pression,
en ce qu'à l'instant (tᵢ) déterminé pour la position de variation (sᵢ), la valeur de réglage déterminant la pression est maintenue jusqu'à ce que les moyens de comparaison (49) constatent que l'unité de déplacement a atteint la position de variation (sᵢ),
et en ce que lorsqu'est atteinte la position de variation (sᵢ), l'instant de commutation réel (t_{i'}) est posé égal à l'instant (tᵢ) déterminé pour la position de variation pour la suite de la courbe de consigne et est adapté à la valeur de réglage.

10. Procédé selon la revendication 9, caractérisé en ce qu'il est prévu comme moteur d'entraînement (44) un moteur d'entraînement électrique et en ce que comme moyen de transport, il est prévu une vis sans fin de transport, qui est mise en rotation par un dispositif d'entraînement en rotation (18).

11. Procédé de régulation ou de commande d'une presse d'injection pour le traitement de matières plastifiables, comportant
- un moteur d'entraînement (44) destiné à déplacer une unité de déplacement,
- un moyen de réglage (46) pour le réglage d'une force pour un nombre fini de forces et pour le réglage d'une position de variation (sᵢ) à laquelle doit avoir lieu la variation de la force entre des forces voisines,
- des moyens de mémorisation (47) pour la mémorisation des valeurs réglées par les moyens de réglage,
- des moyens (48) pour le calcul d'une courbe de force de consigne à l'aide des valeurs réglées par les moyens de réglage (46) en formant des rampes de transition entre les forces voisines, dans la région de la position de variation (sᵢ),
- des moyens de détection de force (23, 26) destinés à détecter la force effective,
- des moyens de détection du temps (45) pour la détection d'instants pendant le déplacement de l'unité de déplacement,
- des moyens de comparaison (49) pour la comparaison entre des valeurs de consigne et des valeurs réelles afin de déterminer une valeur de réglage pour que l'unité de déplacement suive la courbe de variation de consigne,
caractérisé en ce que les moyens de calcul (48) produisent une courbe de consigne de la force (F) en fonction du temps (t) pour définir une grandeur de guidage de force pour la régulation ou la commande de la force,
en ce qu'à l'instant (tᵢ) déterminé pour la position de variation (sᵢ), la valeur de réglage déterminant la force est maintenue jusqu'à ce que les moyens de comparaison (49) constatent que l'unité de déplacement à atteint la position de variation (sᵢ),
et en ce que lorsqu'est atteinte la position de variation (sᵢ), l'instant de commutation réel (t_{i'}) est posé égal à l'instant (tᵢ) déterminé pour la position de variation pour la suite de la courbe de consigne et est adapté à la valeur de réglage.

12. Procédé selon la revendication 11, caractérisé en ce qu'il est prévu comme moteur d'entraînement (44) un moteur d'entraînement électrique et en ce que comme moyen de transport, il est prévu une vis sans fin de transport, qui est mise en rotation par un dispositif d'entraînement en rotation (18).

13. Procédé selon la revendication 8, caractérisé en ce que la régulation de limitation de force est exécutée selon la revendication 11.
